# EUROPÄISCHE PATENTANMELDUNG

(11) **EP 4 388 947 A1**
(43) Veröffentlichungstag der Anmeldung: **26.06.2024**
(21) Anmeldenummer: 23214714.0
(22) Anmeldetag: 06.12.2023
(51) Int. Cl.: A47J 31/52

(54) **HEISSGETRÄNKEGERÄT UND VERFAHREN ZU SEINEM BETRIEB**

(30) Priorität: 23.12.2022 DE 102022214362
(71) Anmelder: BSH Hausgeräte GmbH, 81739 München (DE)
(72) Erfinder: Daburger, Josef, 83313 Siegsdorf (DE); Huber, Michael, 83349 Palling (DE); Frank, Theresa, 83236 Übersee (DE); Nerbl, Christian, 83512 Wasserburg am Inn (DE); Sollmann, Martin, 83278 Traunstein (DE); Botros, Peter, 83301 Traunreut (DE); Schattkowski, Luka, 83224 Grassau (DE); Fischer, Sebastian, 83022 Rosenheim (DE)

(57) **Zusammenfassung**

Ein Heißgetränkezubereitungsgerät (1) für Haushaltszwecke mit einer Eingabevorrichtung (9; 10) für die Wasserhärte des Zubereitungswassers, mit dem das Heißgetränkezubereitungsgerät betrieben wird, und mit einer Auswerte- und Steuerungseinrichtung, die mit einer Signalisierungseinrichtung (7; 9) kommunizierend verbunden ist, **wird durch** eine Erfassungseinrichtung (11) weitergebildet, die dazu ausgebildet ist, die Information der Eingabevorrichtung (10) zu erfassen und an die Auswerte- und Steuerungseinrichtung (8) weiterzuleiten, und **durch** die Ausbildung der Auswerte- und Steuerungseinrichtung (8) dazu, die Information auszuwerten und bei Überschreiten eines vorgegebenen ersten Schwellwerts die Signaleinrichtung (7; 9) zur Ausgabe eines ersten Signals anzusteuern. Die Erfindung betrifft außerdem ein entsprechendes Verfahren zum Betreiben des Heißgetränkezubereitungsgeräts.

## Beschreibung

Die Erfindung betrifft ein Heißgetränkezubereitungsgerät für Haushaltszwecke, mit einer Versorgung für Zubereitungswasser, mit einer Eingabevorrichtung für die Wasserhärte des Zubereitungswassers, mit dem das Heißgetränkezubereitungsgerät betrieben wird, und mit einer Auswerte- und Steuerungseinrichtung, die mit einer Signalisierungseinrichtung kommunizierend verbunden ist. Die Erfindung betrifft außerdem ein Verfahren zum Betreiben eines Heißgetränkezubereitungsgeräts, das eine Eingabevorrichtung für die Wasserhärte des Zubereitungswassers umfasst, mit dem das Heißgetränkezubereitungsgerät betrieben wird.

Die US 2012 010 7453 A1 beschreibt ein Getränkezubereitungsgerät, das über einen Wasserfilter und über einen Sensor stromauf des Wasserfilters verfügt, um verschiedene Kennwerte der Wasserqualität vor Passieren des Wasserfilters zu erfassen. Zusammen mit Daten über unterschiedliche Wasserfilter gibt das Getränkezubereitungsgerät Empfehlungen an den Benutzer aus, welcher Wasserfilter bei der vorliegenden Wasserqualität zu verwenden ist.

Aufgabe der Erfindung ist es dagegen, einen schonenderen Betrieb eines Heißgetränkezubereitungsgeräts zu ermöglichen.

Diese Aufgabe wird bei der eingangs genannten Heißgetränkezubereitungseinrichtung erfindungsgemäß dadurch gelöst, dass sie eine Erfassungseinrichtung umfasst, die dazu ausgebildet ist, die Information der Eingabevorrichtung zu erfassen und an die Auswerte- und Steuerungseinrichtung weiterzuleiten. Außerdem wird sie durch eine derartige Ausbildung der Auswerte- und Steuerungseinrichtung gelöst, dass sie in der Lage ist, die Information der Erfassungseinrichtung auszuwerten und bei Überschreiten eines vorgegebenen ersten Schwellwerts die Signaleinrichtung zur Ausgabe eines ersten Signals anzusteuern.

Es ist bekannt, bei Heißgetränkezubereitungsgeräten eine Wasserhärte einzustellen, die das Zubereitungswasser am Aufstellort des Getränkegerätes aufweist. Daraufhin kann das Getränkegerät seinen Zubereitungsbetrieb auf die Wasserhärte abstimmen, insbesondere rechtzeitig zum Entkalken auffordern. Gelegentlich ist die Wasserhärte am Getränkegerät seiner Einsatzregion entsprechend voreingestellt, beispielsweise durch Verkaufspersonal oder einen Geräteaufsteller, ohne dass dem Benutzer des Getränkegeräts die Einstellung der Wasserhärte bewusst oder bekannt ist. Mit der erfindungsgemäßen Erfassungseinrichtung, die die Information der Eingabevorrichtung betreffend die Wasserhärte erfasst und an die Auswerte- und Steuerungseinrichtung weiterleitet, lässt sich nun die Einstellung der Wasserhärte geräteseitig weitergehend berücksichtigen und verarbeiten. Erfindungsgemäß kann sie mit einem vorgegebenen Schwellwert verglichen werden. Überschreitet sie beispielsweise einen mittleren Wasserhärtegrad als Schwellwert, kann die Steuerungseinrichtung die Signaleinrichtung dazu veranlassen, ein Signal auszugeben. Das Signal kann den Benutzer auffordern, ein Wasserfilter einzusetzen, das die Wasserhärte des Zubereitungswassers herabgesetzt. Dadurch können Kaltablagerungen im Getränkegerät reduziert werden, was dem Benutzer eine längere Haltbarkeit seines Getränkegeräts, längere Entkalkungszyklen bzw. größere Abstände zwischen den Entkalkungsaufforderungen und eine bessere, insbesondere konstantere Getränkequalität beschert. Dem Hersteller kann der Einsatz eines Wasserfilters Garantiekosten ersparen.

Das Zubereitungsgerät kann dazu über eine Schnittstelle für das Einsetzen eines Wasserfilters verfügen. Alternativ können Wasserfilter erhältlich sein, die sich auch ohne explizite Schnittstelle im Zubereitungsgerät bestimmungsgemäß einsetzen lassen. Ein bekannter Einsatzort für derartige Wasserfilter ist der Auslauf eines Wasservorratstanks, der Zubereitungswasser bevorraten kann.

Das Heißgetränkezubereitungsgerät kann eine geräteseitige Eingabevorrichtung für die Angabe der Wasserhärte umfassen. Eine geräteseitige Eingabevorrichtung kann eine mechanische Einstellvorrichtung wie zum Beispiel ein mehrstufiger Schiebeschalter, ein Drehwähler oder dergleichen sein. Alternativ kann die geräteseitige Eingabevorrichtung eine Tastatur oder zumindest eine Taste umfassen, die regelmäßig mit einer Anzeige kombiniert ist, um die Eingabe des Benutzers nachvollziehbar und überprüfbar zu machen.

Alternativ oder zusätzlich kann das Heißgetränkezubereitungsgerät eine Schnittstelle für eine berührungslose Eingabe als Eingabevorrichtung umfassen. Die berührungslose Eingabe kann beispielsweise per Funk- oder WLAN-Verbindung erfolgen. Damit kann die Eingabe der Wasserhärte weitgehend unabhängig vom und ggf. auch über eine gewisse Distanz zum Zubereitungsgerät hinweg erfolgen, beispielsweise durch Servicepersonal. Die Erfassungseinrichtung zur Erfassung der Eingabevorrichtung ist zweckmäßig jeweils an den Typ der Eingabevorrichtung angepasst.

Erfindungsgemäß kann eine voreingestellte Wasserhärte einen Schwellwert darstellen, ab dem das Zubereitungsgerät ein Signal ausgibt. Nach einer weiteren vorteilhaften Ausgestaltung der Erfindung kann das Heißgetränkezubereitungsgerät über einen vorgegebenen zweiten Schwellwert, der vom ersten Schwellwert verschieden ist, und über ein zugehöriges zweites Signal verfügen, das vom ersten Signal verschieden ist und/oder dessen Ausgabezeitpunkt von demjenigen des ersten Signals verschieden ist. Beispielsweise kann bei vier Wasserhärtegraden der höchste Härtegrad "4" der erste Schwellwert sein und der Härtegrad "3" der zweite Schwellwert. Bei Erfassen des ersten Schwellwerts bzw. des Härtegrads "4" kann das erste Signal zum Beispiel mit der Aufforderung zum Einsatz eines Wasserfilters ausgegeben werden, beim zweiten Schwellwert bzw. Härtegrad "3" dagegen kann dagegen das zweite Signal beispielsweise lediglich eine Empfehlung für den Einsatz eines Wasserfilters ausgeben. Alternativ können sowohl das erste als auch das zweite Signal gleichlautend eine Empfehlung für den Einsatz eines Wasserfilters bedeuten. Das erste Signal wird aber zum Beispiel vor jedem neuen Getränkezubereitungsvorgang ausgegeben, das zweite Signal dagegen nur vor beispielsweise jeder fünften Getränkeanforderung.

Die Signalisierung eines erforderlichen Wasserfilters kann vorzugsweise optisch oder akustisch am Zubereitungsgerät selbst erfolgen. Eine optische oder akustische Signalisierung durch ein Einzelsignal erfordert dessen Entschlüsselung durch den Benutzer, beispielsweise anhand einer Betriebsanleitung. Ein leichteres Verständnis ermöglicht eine selbsterklärende Signalisierung durch Sprach- oder Textausgabe als Signal. Nach einer weiteren vorteilhaften Ausgestaltung der Erfindung kann das Heißgetränkezubereitungsgerät daher als Signalisierungseinrichtung eine für den Benutzer lesbare Anzeige wie einen Bildschirm oder Ähnliches und/oder einen Lautsprecher umfassen. Die Steuereinrichtung kann dann die Signalisierungseinrichtung ansteuern, um das Signal als Textmeldung auf der Anzeige und/oder als Sprachnachricht per Lautsprecher auszugeben.

Alternativ oder zusätzlich kann das Heißgetränkezubereitungsgerät nach einer weiteren vorteilhaften Ausgestaltung der Erfindung eine Signalisierungseinrichtung umfassen, die dazu ausgebildet ist, das Signal als Textmeldung und/oder Sprachnachricht zur Wiedergabe auf einem mobilen Empfangsgerät auszugeben. Dazu kann die Signalisierungseinrichtung ebenfalls zum Beispiel Funk- oder WLAN-Technologie nutzen. Die Signalisierung kann dann unabhängig vom Zubereitungsgerät erfolgen und den Benutzer an den Einsatz eines Wasserfilters auch dann erinnern, wenn er nicht am oder in der Nähe des Zubereitungsgeräts ist. Eine Textmeldung kann außerdem mit weiteren Serviceleistungen oder Empfehlungen des Herstellers oder des Verkäufers des Zubereitungsgeräts verknüpft sein, beispielsweise einen Link zu Internet-Seiten enthalten, zum Beispiel zu einem Erklär- und/oder Beratungsvideo oder zu einer Bezugsquelle für den konkreten, ggf. gerätespezifischen Wasserfilter.

Ist ein Wasserfilter eingesetzt, kann ihn eine weitere Erfassungseinrichtung des Zubereitungsgeräts erfassen und eine entsprechende Information an die Auswerte- und Steuerungseinrichtung senden. Alternativ kann eine entsprechende Bestätigungsmöglichkeit für das eingesetzte Filter auf der geräteseitigen Anzeige oder auf dem mobilen Endgerät angeboten werden, sobald eines der Signale ausgegeben wurde. Damit kann eine unnötige Signalisierung nach dem Einsatz eines Filters vermieden werden. Außerdem kann die Auswerte- und Steuerungseinrichtung nun ein angepasstes Intervall für die Aufforderung zur nächsten Entkalkung berechnen.

Die eingangs genannte Aufgabe, einen schonenderen Betrieb eines Heißgetränkezubereitungsgeräts zu ermöglichen, wird außerdem durch ein Verfahren zum Betreiben eines Heißgetränkezubereitungsgeräts für Haushaltszwecke mit einer Eingabevorrichtung für die Wasserhärte des Zubereitungswassers, mit dem das Heißgetränkezubereitungsgerät betrieben wird, und mit einer Auswerte- und Steuerungseinrichtung, die mit einer Signalisierungseinrichtung wirkungsverbunden ist, gelöst. Das Verfahren eignet sich insbesondere zum Betrieb des oben detailliert beschriebenen Heißgetränkezubereitungsgeräts und umfasst die folgenden Schritte:
a) Erfassen einer Eingabe für Wasserhärte,
b) Vergleichen der Eingabe mit mindestens einem vorgegebenen Schwellwert, und
c) Ausgabe eines Signals bei Überschreiten des mindestens einen Schwellwerts.

Unabhängig, auf welche Weise die Wasserhärte eingegeben wird, wird sie bzw. ihre Angabe jedenfalls erfasst. Anschließend wird ihre Angabe mit einem bzw. mit mindestens einem vorgegebenen Schwellwert verglichen. Der Schwellwert kann beispielsweise für einen Härtegrad des Wassers stehen. Es können auch mehrere Schwellwerte für beispielsweise mehrere Härtegrade vorgegebenen sein, mit denen die Angabe im Schritt b) verglichen wird. Der Vergleich führt zu der Feststellung eines Überschreitens oder eines Unterschreitens des Schwellwerts bzw. mindestens eines Schwellwerts. Wird ein Schwellwert überschritten, so wird im Schritt c) ein entsprechendes Signal ausgegeben. Das Signal enthält eine Information für den Benutzer, das den Einsatz eines Wasserfilters betrifft. Unterschiedlichen Schwellwerten können unterschiedliche Signale zugeordnet sein oder unterschiedliche Zeitpunkte zur Ausgabe desselben Signals oder ggf. unterschiedlicher Signale. Damit kann eine Abstufung in der Signalisierung vorgenommen werden, die auf das Vorliegen unterschiedlicher Wasserhärtegrade Rücksicht nehmen kann.

Nach einer vorteilhaften Ausgestaltung des obigen Verfahrens kann das Signal oder eines der Signale gemäß Schritt c) erst nach dem ersten Entkalkungsvorgang ausgegeben werden. Der erste Entkalkungsvorgang zum Entkalken des Zubereitungsgeräts sollte dem Benutzer den Zusammenhang zwischen Wasserhärte und Kalkanfall verdeutlichen. Mit der Signalisierung einer Empfehlung für den Einsatz eines Wasserfilters beim ersten Entkalkungsvorgang besteht die hohe Wahrscheinlichkeit, dass der Benutzer die Zusammenhänge zwischen dem Entkalkungsvorgang und dem Einsatz eines Wasserfilters nachvollziehen und korrekt einschätzen kann. Damit erhält die Signalisierung eine bessere Wirksamkeit.

Nach einer vorteilhaften Ausgestaltung des obigen Verfahrens kann dem Benutzer nach der Ausgabe des ersten oder des zweiten Signals in einem Schritt d) eine Bestätigungsmöglichkeit angeboten werden, wonach der Benutzer den Einsatz bzw. das erfolgte Einsetzen eines Wasserfilters im Zubereitungsgerät bestätigt. Die Bestätigungsmöglichkeit kann auf der Anzeige des Zubereitungsgeräts und/oder auf dem mobilen Endgerät angeboten werden. Die entsprechende Information wertet die Auswerte- und Steuerungseinrichtung aus, wonach zumindest vorerst kein weiteres der obigen Signale mehr ausgegeben wird. Sie können evtl. nach Erreichen der Lebensdauer des Filters bzw. nach seinem Erschöpfen erneut ausgegeben werden. Außerdem passt die Auswerte- und Steuerungseinrichtung ein Erinnerungsintervall für das Entkalken des Zubereitungsgeräts an.

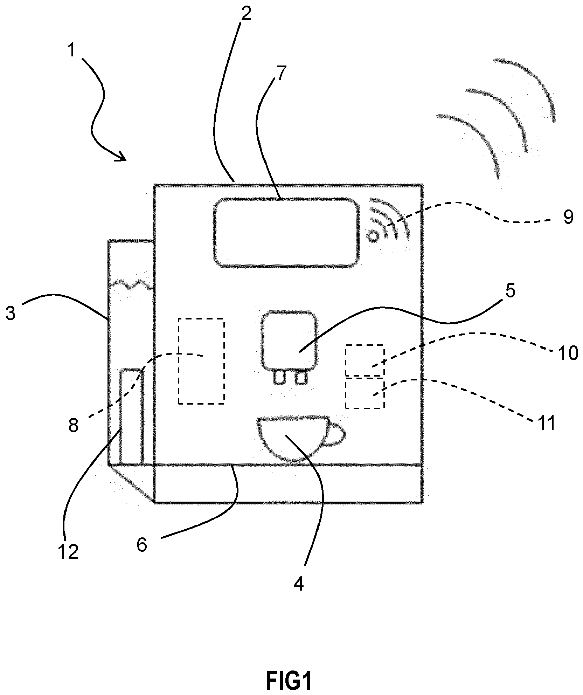

Das Prinzip der Erfindung wird im Folgenden anhand einer Zeichnung beispielshalber noch näher erläutert. In der Zeichnung zeigt die einzige Figur 1 ein stark schematisiertes Heißgetränkezubereitungsgerät 1 in einer Frontansicht. Es verfügt über ein Gehäuse 2, an dessen linker Außenseite ein Vorratsbehälter 3 für Zubereitungswasser abnehmbar angeordnet ist. Ein Getränkegefäß 4 steht unter einem Getränkeauslauf 5 an der dem Betrachter zugewandten Vorderseite des Gehäuses 2 und dort auf einer Aufstellfläche 6. Über dem Getränkeauslauf 5 befindet sich eine beleuchtete Anzeige 7 zur Angabe von auswählbaren Getränken, deren Mengen und zur Angabe weiterer Funktionen des Zubereitungsgeräts 1.

Innerhalb des Gehäuses 2 des Zubereitungsgeräts 1 ist außerdem eine Auswerte- und Steuerungseinrichtung 8 untergebracht. Sie ist sowohl mit der Anzeige 7 als auch mit einem WLAN-Modul 9 elektrisch verbunden. Das WLAN-Modul 9 ermöglicht eine mono- oder bidirektionale Kommunikation des Zubereitungsgeräts 1 mit einem mobilen Endgerät eines Benutzers des Zubereitungsgeräts 1 oder mit einem mobilen Endgerät von Servicepersonal. Die Anzeige 7 und das WLAN-Modul 9 stellen jeweils eine Signalisierungseinrichtung des Zubereitungsgeräts 1 dar.

Auf einer vom Betrachter abgewandten Rückseite des Gehäuses 2 des Zubereitungsgerätes 1 befindet sich ein Schiebeschalter 10. Er bietet vier verschiedene Stellungen entsprechend vier unterschiedlichen Härtegraden 1 bis 4. Der Schiebeschalter 10 stellt damit eine Eingabevorrichtung für die Wasserhärte des Zubereitungswassers dar. Eine an dem Schiebeschalter 10 angeschlossene Erfassungseinrichtung 11 erfasst die Schalterstellung des Schiebeschalters 10 und leitet eine entsprechende Information an die Auswerte- und Steuerungseinrichtung 8 weiter. Das Verschieben des Schiebeschalters 10 vermittelt dem Zubereitungsgerät 1 damit die Informationen über einen vorliegenden Wasserhärtegrad, woraufhin die Auswerte- und Steuereinheit 8 ein Zeitintervall zur Aufforderung zum Entkalken festlegt.

Das Zubereitungsgerät 1 verfügt über eine Schnittstelle 12 im Vorratsbehälter 3 für ein Wasserfilter. Im Einsatz steckt das Wasserfilter auf einem Wasserauslauf des Vorratsbehälters 3, so dass Wasser aus dem Vorratsbehälter 3 durch das Filter hindurch und dadurch gefiltert in das Zubereitungsgerät 1 gelangt.

Wird das Zubereitungsgerät 1 in Betrieb genommen, erfasst die Erfassungseinrichtung 11 zunächst die Stellung des Schiebeschalters 10. Ist der Schiebeschalter 10 auf die dritte Stufe entsprechend dem Wasserhärtegrad "3" eingestellt, so leitet die Erfassungseinrichtung 11 diese Information an die Auswerte- und Steuereinrichtungseinrichtung 8 weiter. Sobald nach mehreren Betriebszyklen eine erste Entkalkung anfällt, zeigt das Zubereitungsgerät 1 auf der Anzeige 7 außerdem die Empfehlung an, einen Wasserfilter einzusetzen. Alternativ oder zusätzlich kann das Zubereitungsgerät 1 über das WLAN-Modul 9 eine Textmeldung an ein mobiles Endgerät des Benutzers senden, in der neben der Empfehlung für den Einsatz eines Wasserfilters an sich auch wenigstens eine Bezugsquelle im Internet für das zum Zubereitungsgerät 1 passende Wasserfilter wiedergegeben ist.

Die Anzeige 7 und/oder die Textmeldung bietet außerdem eine Bestätigungsmöglichkeit an, dass ein Wasserfilter im Zubereitungsgerät 1 eingesetzt wurde. Eine entsprechende Bestätigung verarbeitet die Auswerte- und Steuerungseinrichtung 8 dazu, zunächst keine weiteren Signale zur Aufforderung auszugeben, ein Wasserfilter einzusetzen. Außerdem kann sie ein Erinnerungsintervall zum Entkalken des Zubereitungsgeräts 1 entsprechend anpassen. Schließlich kann sie auch eine Alterung des Wasserfilters berechnen bzw. berücksichtigen und später wieder erneut zum Einsatz eines Wasserfilters auffordern.

Erkennt die Erfassungseinrichtung 11 eine Schalterstellung des Schiebeschalters 10 entsprechend einem Wasserhärtegrad "4", leitet sie diese Information ebenfalls an die Auswerte- und Steuerungseinrichtung 8 weiter. Die Auswerte- und Steuerungseinrichtung 8 gibt daraufhin ein anderes Signal aus, wonach der Einsatz eines Wasserfilters sofort empfohlen wird. Auch daraufhin kann eine Bestätigungsmöglichkeit des Einsatzes eines Wasserfilters angeboten werden, die die Auswerte- und Steuerungseinrichtung 8 bei der Berechnung des Entkalkungsintervalls und bei der Ausgabe von Signalen berücksichtigt.

Da es sich bei dem vorhergehenden, detailliert beschriebenen Zubereitungsgerät 1 und seinem Betriebsverfahren um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Signalisierungseinrichtung in anderer Form als in der hier beschriebenen erfolgen. Ebenso kann die Anordnung der Schnittstelle für das Wasserfilter in einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Zubereitungsgerät
- 2: Gehäuse
- 3: Vorratsbehälter
- 4: Getränkegefäß
- 5: Getränkeauslauf
- 6: Aufstellfläche
- 7: Anzeige
- 8: Auswerte- und Steuerungseinrichtung
- 9: WLAN-Modul
- 10: Eingabevorrichtung
- 11: Erfassungseinrichtung
- 12: Schnittstelle für Wasserfilter

## Patentansprüche

1. Heißgetränkezubereitungsgerät (1) für Haushaltszwecke mit einer Eingabevorrichtung (9; 10) für die Wasserhärte des Zubereitungswassers, mit dem das Heißgetränkezubereitungsgerät betrieben wird, und mit einer Auswerte- und Steuerungseinrichtung, die mit einer Signalisierungseinrichtung (7; 9) kommunizierend verbunden ist, **gekennzeichnet durch** eine Erfassungseinrichtung (11), die dazu ausgebildet ist, die Information der Eingabevorrichtung (10) zu erfassen und an die Auswerte- und Steuerungseinrichtung (8) weiterzuleiten, und **gekennzeichnet durch** die Ausbildung der Auswerte- und Steuerungseinrichtung (8) dazu, die Information auszuwerten und bei Überschreiten eines vorgegebenen ersten Schwellwerts die Signaleinrichtung (7; 9) zur Ausgabe eines ersten Signals anzusteuern.

2. Heißgetränkezubereitungsgerät (1) nach Anspruch 1, **gekennzeichnet durch** eine geräteseitige Eingabevorrichtung (10).

3. Heißgetränkezubereitungsgerät (1) nach Anspruch 1, **gekennzeichnet durch** eine Schnittstelle (9) für eine berührungslose Eingabe als Eingabevorrichtung.

4. Heißgetränkezubereitungsgerät (1) nach einem der obigen Ansprüche, **gekennzeichnet durch** einen vorgegebenen zweiten Schwellwert und durch ein zugehöriges zweites Signal.

5. Heißgetränkezubereitungsgerät (1) nach einem der Ansprüche 1 bis 4 und mit einer Anzeige (7), **dadurch gekennzeichnet, dass** die Signalisierungseinrichtung dazu ausgebildet ist, das Signal als Textmeldung auf der Anzeige (7) auszugeben.

6. Heißgetränkezubereitungseinrichtung (1) nach einem der Ansprüche 1 bis 5, **dadurch gekennzeichnet, dass** die Signalisierungseinrichtung (9) dazu ausgebildet ist, das Signal als Textmeldung zur Wiedergabe auf einem mobilen Empfangsgerät auszugeben.

7. Heißgetränkezubereitungseinrichtung (1) nach einem der Ansprüche 1 bis 6, **dadurch gekennzeichnet, dass** die Auswerte- und Steuerungseinrichtung (8) dadurch ausgebildet ist, die Information auszuwerten, dass sie die erfasste Information der Eingabevorrichtung (10) einer Datenübertragungseinrichtung bereitstellt und Daten über eine erfolgte Auswertung mittels der Datenübertragungseinrichtung empfängt.

8. Verfahren zum Betreiben eines Heißgetränkezubereitungsgerät für Haushaltszwecke mit einer Eingabevorrichtung für die Wasserhärte des Zubereitungswassers, mit dem das Heißgetränkezubereitungsgerät betrieben wird, und mit einer Auswerte- und Steuerungseinrichtung, die mit einer Signalisierungseinrichtung wirkungsverbunden ist, insbesondere eines Heißgetränkezubereitungsgerät nach einem der obigen Ansprüche, mit den folgenden Schritten:
a) Erfassen einer Eingabe für Wasserhärte,
b) Vergleichen der Eingabe mit einem vorgegebenen Schwellwert, und
c) Ausgabe eines Signals bei Überschreiten des Schwellwerts.

9. Verfahren nach dem obigen Verfahrensanspruch, **dadurch gekennzeichnet, dass** das Signal gemäß Schritt c) erst nach einem ersten Entkalkungsvorgang zum Entkalken des Zubereitungsgeräts ausgegeben wird.

10. Verfahren nach einem dem obigen Verfahrensansprüche 8 oder 9, **dadurch gekennzeichnet, dass** in einem Schritt d) eine Bestätigungsmöglichkeit angeboten wird zum Bestätigen eines erfolgten Einsetzens eines Wasserfilters im Zubereitungsgerät.

11. Verfahren nach einem der obigen Verfahrensansprüche 8 bis 10, **dadurch gekennzeichnet, dass** das Vergleichen in Schritt c) einen Schritt c1) umfasst, bei dem die Information der Eingabevorrichtung (10) einer Datenübertragungseinrichtung bereitgestellt wird, und einen Schritt c2) umfasst, bei dem Daten zu einer erfolgten Auswertung mittels der Datenübertragungseinrichtung empfangen werden.

12. Computerprogrammprodukt, umfassend Befehle, die bewirken, dass eine Heißgetränkezubereitungseinrichtung (1) nach einem der Ansprüche 1 bis 7 nach einem Verfahren gemäß einem der Ansprüche 8 bis 11 angesteuert wird.
